# EUROPEAN PATENT SPECIFICATION

(11) **EP 4 138 349 B1**
(45) Date of publication and mention of the grant of the patent: **27.08.2025**
(21) Application number: 21792084.2
(22) Date of filing: 23.04.2021
(51) Int. Cl.: H04L 45/00, H04L 45/50, H04L 45/74

(54) **DATA PACKET PROCESSING METHOD AND DEVICE**
DATENPAKETVERARBEITUNGSVERFAHREN UND -VORRICHTUNG
PROCÉDÉ ET DISPOSITIF DE TRAITEMENT DE PAQUET DE DONNÉES

(30) Priority: 24.04.2020 CN 202010334603
(43) Date of publication of application: 22.02.2023
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHENG, Weiqiang, Beijing 100053 (CN); LI, Han, Beijing 100053 (CN); DUAN, Xiaodong, Beijing 100053 (CN)
(74) Representative: J A Kemp LLP
(86) International application number: PCT/CN2021/089362
(87) International publication number: WO 2021/213507

(56) References cited:
- EP-B1- 4 020 909
- WO-A1-2019/005956
- CN-A- 109 379 359
- US-A1- 2015 326 675
- W. CHENG CHINA MOBILE Z. LI C. LI HUAWEI TECHNOLOGIES F. CLAD CISCO SYSTEMS, INC A. LIU ZTE CORPORATION C. XIE CHINA TELECOM Y. LI: "Generalized SRv6 Network Programming for SRv6 Compression; draft-cl-spring-generalized-srv6-for-cmpr-00.txt", GENERALIZED SRV6 NETWORK PROGRAMMING FOR SRV6 COMPRESSION; DRAFT-CL-SPRING-GENERALIZED-SRV6-FOR-CMPR-00.TXT; INTERNET-DRAFT: SPRING WORKING GROUP, INTERNET ENGINEERING TASK FORCE, IETF; STANDARDWORKINGDRAFT, INTERNET SOCIETY (ISOC) 4, RUE DES FALAISE, no. 00, 19 May 2020 (2020-05-19), Internet Society (ISOC) 4, rue des Falaises CH- 1205 Geneva, Switzerland , pages 1 - 15, XP015139641
- CHENG WEIQIANG, YISONG LIU, WENYING JIANG, GENG ZHANG: "Research and application of G-SRv6 head compressions optimization technology", DIANXIN KEXUE - TELECOMMUNICATIONS SCIENCE, RENMIN YOUDIAN CHUBANSHE, BEIJING, CN, vol. 36, no. 8, 20 August 2020 (2020-08-20), CN , pages 22 - 27, XP055860622, ISSN: 1000-0801, DOI: 10.11959/j.issn.1000−0801.2020254
- C. WEIQIANG CHINA MOBILE G. MIRSKY ZTE CORP. P. SHAOFU L. AIHUA ZTE CORPORATION W. XIAOLAN NEW H3C TECHNOLOGIES CO. LTD C. WEI CEN: "Unified Identifier in IPv6 Segment Routing Networks; draft-mirsky-6man-unified-id-sr-06.txt", UNIFIED IDENTIFIER IN IPV6 SEGMENT ROUTING NETWORKS; DRAFT-MIRSKY-6MAN-UNIFIED-ID-SR-06.TXT; INTERNET-DRAFT: NETWORK, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAN, no. 06, 14 March 2020 (2020-03-14), Internet Society (ISOC) 4, rue des Falaises CH- 1205 Geneva, Switzerland , pages 1 - 24, XP015138711
- W. CHENG CHINA MOBILE Z. LI C. LI HUAWEI TECHNOLOGIES C. XIE C. LI CHINA TELECOM H. TIAN F. ZHAO CAICT: "Generalized SRv6 Network Programming; draft-cl-spring-generalized-srv6-np-00.txt", GENERALIZED SRV6 NETWORK PROGRAMMING; DRAFT-CL-SPRING-GENERALIZED-SRV6-NP-00.TXT; INTERNET-DRAFT: SPRING WORKING GROUP, INTERNET ENGINEERING TASK FORCE, IETF; STANDARDWORKINGDRAFT, INTERNET SOCIETY (ISOC) 4, RUE DES FALAISES CH- 1205 GENEVA, SWITZERL, no. 00, 11 February 2020 (2020-02-11), Internet Society (ISOC) 4, rue des Falaises CH- 1205 Geneva, Switzerland , pages 1 - 30, XP015137699

## Description

### CROSS-REFERENCE TO RELATED APPLICATION

The disclosure is based upon and claims priority to Chinese patent application No. 202010334603.0, filed on April 24, 2020.

### TECHNICAL FIELD

The present disclosure relates to the technical filed of communications, and in particular to a method for data packet processing, a node, and a computer-readable storage medium.

### BACKGROUND

In carrier networks, the requirement on the number of Segment Routing (SR) label layers is high. Taking the 5th Generation (5G) bearer network as an example, with the centralized deployment of the 5G core network, the traffic of a base station needs to pass through a metropolitan area network and an Internet Protocol (IP) backbone network. In typical scenarios, in the metropolitan area network, an access ring has 8-10 nodes, a convergence ring has 4-8 nodes, and a core ring also has 4-8 nodes; in the IP backbone network, the traffic also needs to pass through multiple router nodes. At the same time, due to network slicing, highly reliable Service-Level Agreement (SLA) and requirements for manageablity and controllability, the carrier network needs to be able to specify an explicit path, and an end-to-end SR tunnel will have 10 hops or more. Therefore, at present, most carriers deploying Multi-Protocol Label Switching (MPLS)-SR are required to support a Segment ID (SID) label of more than 8 layers.

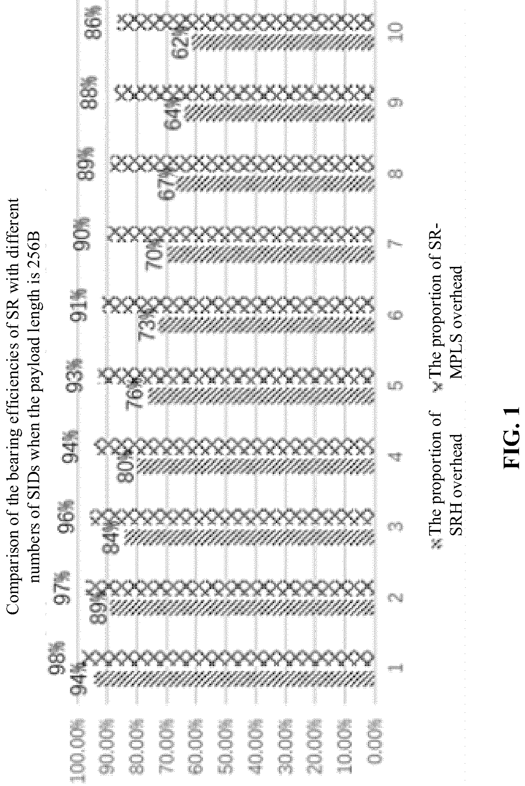

At present, SRv6 is an SR solution extended based on Internet Protocol Version 6 (IPv6). The SRv6 solution implements forwarding based on a Segment Routing Header (SRH), and has an SID length of 128 bits. The 8-layer SID incurs an overhead of 128 bytes to a data packet. For application payloads with an average length of 256 bytes, the overhead of SRv6 is more than 1/3, and then the bandwidth utilization is reduced to 67% or less. In the same scenario, the overhead of SR-MPLS is only 32 bytes, and the bandwidth utilization is still 89%. The comparative analysis of the bearing efficiencies of SRv6 and SR-MPLS when the number of SIDs is 1 to 10 is shown in FIG. 1 (only the overheads of the SRH and the SR-MPLS SID are compared simply).

The increased overhead, on the one hand, causes a decrease in the network utilization, and on the other hand, brings more challenges to support deep data packet load balancing, in-band telemetry, and Network Service Header (NSH).

In addition, SRv6 deployment will inevitably coexist with SR-MPLS networks. The difference in network utilization may cause a problem of unbalanced interfaces at a network perimeter, which leads to the waste of investment. When an SR-MPLS network interconnects with an SRv6 network domain, considering the case of 100G links, 256-byte data packets, and 8-layer SID, a 100 Gigabit Ethernet (GE) link in an SR-MPLS domain may require two 100GE links to match in an SRv6 domain due to the large difference in link utilization.

In carrier applications, the SRv6 requires a network chip to insert fields of more than 128 bytes, which are equivalent to the depth of a 32-layer MPLS-SR label, which is beyond the capability of the deployed network chip. If a loopback solution is used inside the chip, the network performance will be greatly reduced and higher delay and jitter will be introduced. In a redesigned network chip, supporting the SRv6 requires further expansion of an internal processing bus bandwidth, which is the key factor of chip cost and power consumption.

The SRv6 requires the network chip to read a complete SRH at an intermediate node, and then extract and forward the segment to be processed according to a position indicated by a pointer. Compared with the MPLS-SR which only needs to read the outermost label, the introduced complexity further increases a processing delay of the network chip.

Low power consumption and low delay are the key factors of 5G solutions of the carriers. The increase of power consumption, cost and delay brought by the complexity of SRv6 to the network chip brings challenges to its implementation and application.

Based on the above analysis, the overhead of the existing SRv6 data packet is high, which increases the complexity of the network chip and makes it difficult to smoothly upgrade. As a result, the SRv6 cannot be rapidly deployed to the carrier networks, and further evolution based on the SRv6 technology is needed.

Related technologies are discussed in EP 4 020 909 B1 (HUAWEI TECH CO LTD [CM]) 3 January 2024 and WO 2019/005956 A1 (CISCO TECH INC [US]) 3 January 2019.

### SUMMARY

The present invention is defined in the appended independent claims. Advantageous features are set out in the appended dependent claims.

A purpose of the embodiments of the present disclosure is to provide a method, a node and a computer-readable storage medium for data packet processing, so as to solve the problem of high overhead of the existing SRv6 data packet.

### BRIEF DESCRIPTION OF THE DRAWINGS

By reading the detailed description of preferred implementation modes below, a variety of other advantages and benefits will become clear to those of ordinary skill in the art. The accompanying drawings are only intended to illustrate the purpose of the preferred implementation modes and are not considered as a limitation on the present disclosure. In addition, the same reference marks are used to indicate the same parts throughout the accompanying drawings. In the accompanying drawings:
FIG. 1 is a schematic diagram showing the comparative analysis of the bearing efficiencies of SR with different numbers of SIDs when the payload length is 256 bytes (B).
FIG. 2 is a schematic diagram of an encapsulation format of a standard SRv6 extension header.
FIG. 3 is a flowchart of a method for data packet processing in an embodiment of the present disclosure.
FIG. 4 is a schematic diagram of a standard network programmable SRv6 SID format.
FIG. 5 is a schematic diagram of a typical network programmable SRv6 Locator.
FIG. 6 is a schematic diagram of a compressible SRv6 SID format in an embodiment of the present disclosure.
FIG. 7 is a schematic diagram of a compressed 32-bit SID container format in an embodiment of the present disclosure.
FIG. 8 is a schematic diagram of a format of mixed encoding a 128-bit SRv6 SID and a 32-bit X-SID in an X-SRH according to an embodiment of the present disclosure.
FIG. 9 is a schematic diagram of mixed encoding a 128-bit SRv6 SID and a 32-bit X-SID in an X-SRH according to an embodiment of the present disclosure.
FIG. 10 is a schematic diagram of XI in an embodiment of the present disclosure.
FIG. 11 is a schematic diagram of updating an X-SID in an embodiment of the present disclosure.
FIG. 12 is a schematic diagram of forwarding a data packet in a mixed encoding scenario according to an embodiment of the present disclosure.
FIG. 13 is a schematic diagram of forwarding a data packet in a pure compression scenario according to an embodiment of the present disclosure.
FIG. 14 is schematic diagram I of a node not being part of the invention.
FIG. 15 is schematic diagram II of a node according to an embodiment of the present disclosure.

### DETAILED DESCRIPTION

SR is a source routing technology, which constitutes path-oriented network architecture based on the concept of Software Defined Network (SDN), supports the multi-level programmable requirements of future networks, and can meet the connection requirements in the application scenarios of super connection and slicing of 5G. SR-MPLS is an SR solution formed based on the current mainstream MPLS forwarding plane.

SRv6 is an SR solution extended based on IPv6. The IPv6 technology is the main technology of the new generation network. The long-term consideration of the SRv6 based on the IPv6 is the evolution trend of the future network, and the research on the mechanism of the SRv6 technology is a hot spot in the industry.

The 128-bit SID of standard SRv6 uses the SID of IPv6 address format, and has a routable attribute compared with the SID of MPLS label format, which simplifies the creation of an inter-area path and implements the capability of easily creating an end-to-end path in an IPv6 network. At the same time, the SRv6 SID supports a programmable capability, can flexibly process network and service functions, and can flexibly meet the requirements of various network and service functions in view of the collaborative support of centralized and distributed control planes, thus adapting to the needs of network and service development.

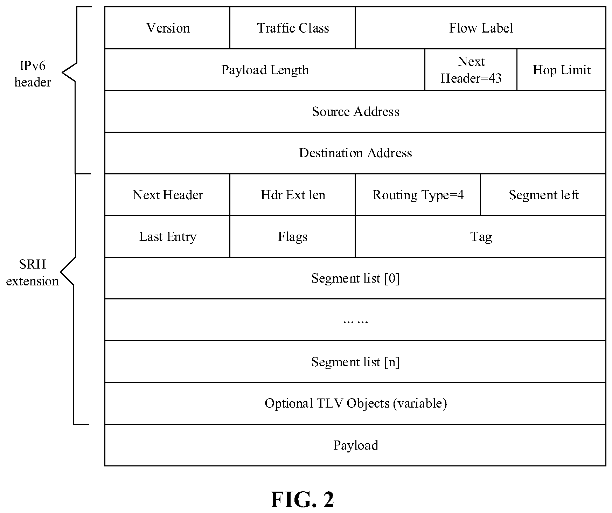

The SR guides a data packet to pass through a network by encapsulating a series of instructions through a header node. In SRv6 architecture, an instruction is a 128-bit IPv6 address. FIG. 2 shows an encapsulation format of a standard SRv6 extension header. An IPv6 header includes: a Version field, a Traffic Class field, a Flow Label field, a Payload Length field, a Next Header field, a Hop Limit field, a Source Address field, and a Destination Address field. An SRH extension header includes: a Next Header field, a Hdr Ext len field (indicating the length of the SRH header), a Routing Type field, a Segment Left (SL) field (indicating the number of intermediate nodes that should be accessed before reaching a destination node), a Last Entry field (indicating the index, which contains the last element of a segment list, in the segment list), a Flags field (indicating some IDs of the data packets), a Tag field (for identifying the data packets in the same group), a Segment list field (including the 128-bit IPv6 address), an Optional TLV object field (variable) and a Payload field.

It can be known from the encapsulation format of the SRv6 extension header that, the encapsulation length of the SRv6 extension header is 40 bytes (IPv6 header)+8 bytes (SRH fixed header)+16×N bytes (segment list). Therefore, as the number of SIDs specified by SRv6 increases, the additional overhead incurred by the encapsulation of the SRv6 extension header increases. To solve the problem, a function of shortening the SRv6 extension header needs to be implemented.

Although the standard SRv6 has many advantages mentioned above, its disadvantages are equally obvious. The actual deployment of the SRv6 technology in the network currently faces two challenges: first, the overhead of the SRv6 data packet is high, and the bandwidth utilization of a network link is low; the bandwidth utilization is only about 60% in the case of 256-byte packet length and 8-layer SID; second, SRv6 data packet processing has high requirements on a chip, the existing network device has difficulty in supporting deep copying and operation of the SRH header, and the processing of the 128-bit SRH header will reduce the processing efficiency of the existing chip.

For the problems of the standard SRv6 technology, the inventor found that the SRH of the standard SRv6 may be compressed and optimized, a shorter and simpler X-SID, for example, the typical 32-bit SID, may be used to optimize the SID of the SRv6, and a 32-bit X-SID may be used to represent the standard 128-bit SID and replace its encapsulation in the SRH header. In this way, the overhead of the SRH encapsulation of the standard SRv6 is optimized, and the performance of the SRv6 is greatly optimized while the SRv6 function is supported, and the large-scale deployment of the SRv6 technology is supported.

The technical solutions in the embodiments of the present application will be described clearly and completely below in combination with the drawings in the embodiments of the present application. It is apparent that the described embodiments are not all embodiments but part of embodiments of the application. All other embodiments obtained by those of ordinary skill in the art based on the embodiments in the present disclosure without creative work shall fall within the scope of protection of the embodiments of the present disclosure.

In addition, term "include" and any variations thereof in the specification and the claims of the present disclosure are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead. In addition, "and/or" used in the specification and the claims indicates at least one of the connected objects, for example, A and/or B indicates three cases, that is, individual A is included, individual B is included, and both A and B exist.

In the embodiments of the disclosure, the words like "exemplary" or "for example" are used to serve as example, example illustration or explanation. Any embodiments or designs described as "exemplary" or "for example" in the embodiments of the present disclosure shall not be construed as being preferred or superior to other embodiments or designs. More exactly, the purpose of using the word "exemplary" or "for example" is to present related concepts in a specific way.

The technologies described herein are not limited to 5G systems and subsequent evolved communication systems, and a Long Term Evolution (LTE)/LTE-Advanced (LTE-A) system, and may also be applied to various wireless communication systems, for example, Code Division Multiple Access (CDMA), Time Division Multiple Access (TDMA), Frequency Division Multiple Access (FDMA), Orthogonal Frequency Division Multiple Access (OFDMA), Single-Carrier Frequency-Division Multiple Access (SC-FDMA), and other systems.

Terms "system" and "network" are usually used interchangeably. The CDMA system may implement radio technologies such as CDMA2000 and Universal Terrestrial Radio Access (UTRA). UTRA includes Wideband CDMA (WCDMA) and other CDMA variations. The TDMA system may implement radio technologies such as Global System for Mobile Communication (GSM). The OFDMA system may implement radio technologies such as Ultra Mobile Broadband (UMB), Evolution-UTRA (E-UTRA), Institute of Electrical and Electronics Engineers (IEEE) 802.11 (Wireless Fidelity (Wi-Fi)), IEEE 802.16 (World Interoperability for Microwave Access (WiMAX)), IEEE 802.20, and Flash-OFDM. UTRA and E-UTRA are part of Universal Mobile Telecommunications System (UMTS). LTE and more advanced LTE (such as LTE-A) are new UMTS releases using E-UTRA. UTRA, E-UTRA, UMTS, LTE, LTE-A and GSM are described in the documents from the organization named after "3rd Generation Partnership Project (3GPP)". CDMA2000 and UMB are described in the documents from the organization named after "3GPP2". The technologies described herein may be applied not only to the above-mentioned systems and radio technologies but also to other systems and radio technologies.

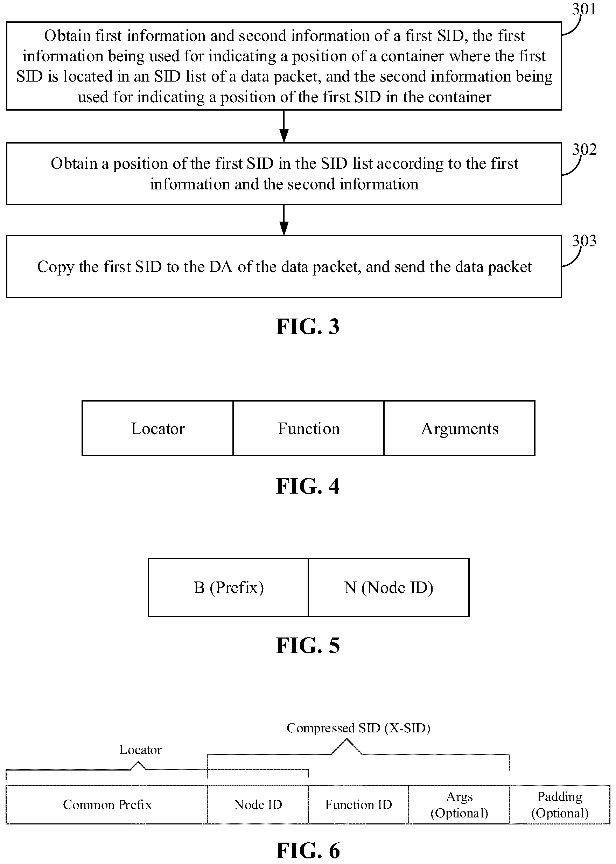

Referring to FIG. 3, an embodiment of the present disclosure provides a method for data packet processing. The method may be performed by a node, for example, an SRv6 node. The method includes the following steps.

At S301, first information and second information of a first SID are obtained, the first information being used for indicating the position of a container where the first SID is located in an SID list of a data packet, and the second information being used for indicating the position of the first SID in the container.

In some optional embodiments, the first information may also be SL information, which identifies the number of left segments; and the second information may be index information, which may also be referred to as SID Index information and is not limited in the embodiments of the present disclosure.

The container (or SID container) includes one or more first SIDs. For example, if the container is 128 bits, the container may contain a standard SID (128-bit SID) or multiple compressed SIDs, that is, the first SID may be a standard SID or a compressed SID. The compressed SID may be a 32-bit compressed SID or a 16-bit compressed SID, which is not limited in the present embodiment.

Taking the 32-bit compressed SID as an example, a 128-bit container may include: three 32-bit compressed SIDs and one padding for completing 128 bits, or may include two 32-bit compressed SIDs and two paddings for completing 128 bits, or may include one 32-bit compressed SID and three paddings for completing 128 bits, or may include four 32-bit compressed SIDs. It can be understood that the first SID does not include the padding for completing 128 bits.

Taking that a 128-bit container includes three 32-bit compressed SIDs and one padding for completing 128 bits as an example, it can be padding, 32-bit compressed SID, 32-bit compressed SID, 32-bit compressed SID, and 32-bit compressed SID from left to right, and their respective second information may be 0, 1, 2, and 3.

Taking that a 128-bit container includes a standard 128-bit SID as an example, there is only one standard SID in the container, and the second information of the standard SID may be null or a default value.

Taking that the SID list includes five containers as an example, the position of the container in the SID list may be expressed as: SL=0, SL=1, SL=2, SL=3, and SL=4 from bottom to top. It can be understood that the form of expression of "the position of the container in the SID list" is not specifically limited in the embodiments of the present disclosure.

At S302, the position of the first SID in the SID list is obtained according to the first information and the second information.

Exemplarily, if the first SID is a compressed SID, a corresponding compressed SID may be located in the SID list according to the SL and index of the compressed SID. If the first SID is a 128-bit SID and the second information may be null, then a corresponding 128-bit SID may be located in the SID list according to the SL of the first SID.

At S303, the first SID is copied (or updated) to a DA of the data packet, and the data packet is sent.

First manner: the first SID is copied to the DA of the data packet, the first SID is combined with a common prefix or an address block in the DA to get a new DA, and the data packet is forwarded to a next endpoint according to the new DA.

For example, the first SID may be a compressed SID, a corresponding compressed SID may be located in the SID list based on the SL and the index of the compressed SID, the compressed SID is copied to the DA of the data packet and combined with the common prefix or address block to get a new DA, and the data packet is forwarded to the next endpoint according to the new DA.

Second manner: the first SID and the second information are copied to the DA of the data packet, the first SID and the second information are combined with the common prefix or the address block in the DA to get a new DA, and the data packet is forwarded to the next endpoint according to the new DA.

For example, the first SID may be a compressed SID, a corresponding compressed SID may be located in the SID list based on the SL and the index of the compressed SID, the compressed SID and the index are copied to the DA of the data packet and combined with the common prefix or the address block to get a new DA, and the data packet is forwarded to the next endpoint according to the new DA.

Third manner: the first SID and the second information are copied to the DA of the data packet, and the data packet is forwarded to the next endpoint. For example, the first SID is a 128-bit SID, a corresponding 128-bit SID may be located in the SID list based on the SL and the index of the 128-bit SID, the 128-bit SID is copied to the DA of the data packet, and the data packet is forwarded to the next endpoint.

In some optional embodiments of the present disclosure, S301 may include the following steps.

At S3011, third information and fourth information of a second SID are obtained, the third information being used for indicating the position of a container where the second SID is located in the SID list of the data packet, and the fourth information being used for indicating the position of the second SID in the container.

**In** some optional embodiments, the third information may also be SL information, which identifies the number of left segments; and the fourth information may also be index information, which is not limited in the embodiments of the present disclosure.

At S3012, the first information and the second information of the first SID are obtained according to the third information and the fourth information of the second SID.

In some optional embodiments, the second SID is an SID immediately before the first SID in the SID list, or the second SID is ordered before the first SID in the SID list, and there may be one or more paddings (represented by "0") between the second SID and the first SID. For example, the order in the SID list is the second SID, padding, and the first SID.

The above "the second SID is an SID immediately before the first SID" may be understood as follows: the first SID is the next SID of the second SID, that is, the node that matches the first SID is the next node of the node that matches the second SID, for example, the node that matches the first SID is N3, and the node that matches the second SID is N2.

In some optional embodiments, before S3011, it can be determined whether the next SID of the second SID is padding; if not, S3011 is executed; if yes, the first SID is a 128-bit SID by default; in this case, the first information of the first SID may be calculated based on the third information of the second SID, and the second information of the first SID is set to null.

Exemplarily, it is possible to identify whether the next SID of the second SID is padding based on the flavor of the second SID. That is, if END.X SID (second SID) locally issued by the node is hit in a local SID table, and COC flavor is not configured (the COC flavor is used for indicating the SID type of the next SID), it is possible to identify whether the next SID of the second SID is padding.

In some optional embodiments of the present disclosure, S3011 may include the following steps.

At S30111, the third information of the second SID is obtained from the SRH of the data packet.

At S30112, the index of the second SID is obtained from the DA of the data packet. The index of the second SID includes the fourth information. That is, the index of the second SID may include one or more indicator bits. The format of the index of the second SID is not specifically limited in the embodiments of the present disclosure.

In some optional embodiments of the present disclosure, S3012 may include the following steps.

At S30121, it is determined whether the first SID and the second SID are in the same container according to the fourth information or flavor of the second SID.

In an example, if the fourth information of the second SID is greater than zero, it means that the first SID and the second SID are in the same container; if the fourth information of the second SID is equal to zero, it means that the first SID and the second SID are not in the same container.

In another example, if the flavor of the second SID does not indicate the SID type of the next SID, it means that the first SID and the second SID are not in the same container. That is, if END.X SID (second SID) locally issued by the node is hit in the local SID table, and COC flavor is not configured (the COC flavor is used for indicating the SID type of the next SID), the next SID (the first SID) is indicated as a 128-bit SID by default, that is, a padding may be included between the second SID and the first SID.

At S30122, if the first SID and the second SID are in the same container, the first information of the first SID is the same as the third information of the second SID (that is, the SL is the same), and the second information of the first SID is obtained according to the fourth information of the second SID; for example, the fourth information (index) of the second SID is subtracted by one to obtain the second information (index) of the first SID; or,

if the first SID and the second SID are not in the same container, the first information of the first SID is obtained according to the third information of the second SID; for example, the third information of the second SID is subtracted by one (SL-1) to obtain the first information (SL) of the first SID; and the second information of the first SID is determined according to the SID type of the first SID.

Exemplarily, if the SID type of the first SID is 32-bit, the second information of the first SID is "3".

In some optional embodiments of the present disclosure, the SID type of the first SID may be indicated by the flavor (COC flavor) of the second SID. It can be understood that the flavor of the second SID may be found in the local SID table of the current node, as shown in the table.

**Table 1**

| SID flavor type | Function description |
|---|---|
| None | Not adding flavor; the default flavor of the SID indicates that the first SID is a 128-bit SRv6 SID |
| COC32 | Identifying that the next SID (the first SID) is a 32-bit compressed SID |
| COC16 | Identifying that the next SID (the first SID) is a 16-bit compressed SID |

In some optional embodiments of the present disclosure, the method may further include the following operations. The first information of the first SID is updated to the SRH of the data packet. The second information of the first SID is updated to the DA of the data packet as the index of the first SID.

In some optional embodiments of the present disclosure, S301 may include the following steps.

At S3013, the third information, the fourth information and fifth information of the second SID are obtained, the third information being used for indicating the position of a container where the second SID is located in the SID list of the data packet, the fourth information being used for indicating the position of the second SID in the container, and the fifth information being used for indicating the SID type of the second SID and/or indicating whether the second SID is compressed.

Exemplarily, the SID types may include 8-bit, 16-bit, 32-bit, 64-bit, or 128-bit.

In some optional embodiments, the fifth information may include one or more indicator bits.

At S3014, the first information and the second information of the first SID are obtained according to the third information, the fourth information and the fifth information of the second SID.

The second SID is an SID immediately before the first SID in the SID list, or the second SID is ordered before the first SID in the SID list, and there may be one or more paddings (represented by "0") included between the second SID and the first SID.

In some optional embodiments of the present disclosure, S3013 may include the following steps.

At S30131, the third information of the second SID is obtained from the SRH of the data packet.

At S30132, the index of the second SID is obtained from the DA of the data packet. The index of the second SID includes the fourth information and the fifth information.

In some optional embodiments, the index of the second SID may include one or more indicator bits.

In some optional embodiments of the present disclosure, S3014 may include the following steps.

At S30141, it is determined whether the first SID and the second SID are in the same container according to the SID type of the second SID and the SID type of the first SID.

Exemplarily, if the SID type of the second SID is 32-bit and the SID type of the first SID is 32-bit, it is determined that the first SID and the second SID are in the same container; if the SID type of the second SID is 32-bit and the SID type of the first SID is 128-bit, it is determined that the first SID and the second SID are not in the same container.

At S30142, if the first SID and the second SID are in the same container, the first information of the first SID is the same as the third information of the second SID (that is, the SL is the same), and the second information of the first SID is obtained according to the fourth information of the second SID; for example, the fourth information of the second SID is subtracted by one (index-1) to obtain the second information of the first SID; or,
if the first SID and the second SID are not in the same container, the first information of the first SID is obtained according to the third information of the second SID; for example, the third information of the second SID is subtracted by one to obtain the first information of the first SID; and the second information of the first SID is determined according to the SID type of the first SID.

Exemplarily, if the SID type of the first SID is 32-bit, the second information of the first SID is "3", that is, the index of the first SID is 3.

In the embodiments of the present disclosure, the container is used for containing a standard SID or multiple compressed SIDs. A compressed SID includes a node ID and a value of a function of the node.

In the embodiments of the present disclosure, the SID list includes at least a compressed SIDs. When the DA in the data packet is updated, the compressed SID is spliced with the common prefix in the current DA to form a new SID, so as to continue to perform the table lookup and forwarding operations. In this way, the data packet is compressed, and the header overhead of the data packet is effectively reduced.

In addition, in the embodiments of the present disclosure, the standard SIDs and the compressed SIDs may be mixed encoded in the SID list, so as to support mixed configuration of compressed nodes and common nodes in an SRv6 path to achieve existed network evolution and smooth upgrade. At the same time, in a multi-domain scenario, due to the limited address planning, there is no guarantee that the SIDs of multiple domains have a common prefix, and the SRv6 path across multiple domains can be easily created by mixed encoding.

An introduction is given below taking a scenario of IPv6 as an example. Of course, it can be understood that the embodiments of the present disclosure may also be applied to the IP technology of other versions (for example, IPv5, IPv7, IPv9, and IPv10), in addition to the IPv6 technology. The method applied to the IP technology of other versions is similar to that of the IPv6 technology and will not be repeated here.

In an SRv6 deployment, an address block needs to be distributed through address planning for the allocation of SID. The address block may be called SID space. Therefore, in an SRv6 domain, the SID allocated from the SID space may have a common prefix. In general, all SIDs in the SRH have the same prefix, while this part is redundant. Removing this part of redundant information may effectively reduce the overhead of the SRv6 header.

Therefore, in the embodiments of the present disclosure, the common prefix of the SID in the SID list is removed, and only the variable compressed SID (or short SID, or X-SID) is carried. When replacing the DA, a new SID is formed by stitching the compressed SID with the common prefix in the current IPv6 DA, to continue the operations of table lookup and forwarding, so as to achieve the compression of SRv6.

In addition, in the embodiments of the present disclosure, the traditional SRv6 SID and the compressed SID are mixed encoded in the SRv6 (for example, the SRv6 is called X-SRv6), so as to support mixed configuration of compressed nodes and common SRv6 nodes in the SRv6 path, to achieve existed network evolution and smooth upgrade. At the same time, in a multi-domain scenario, due to the limited address planning, there is no guarantee that the SIDs of multiple domains have a common prefix, and the SRv6 path across multiple domains can be easily created by mixed encoding.

### (I) Introduction to the standard 128-bit SRv6 SID format

SRv6 Segment Identifier is used for identifying an ID of an SRv6 Segment. The standard SRv6 SID is a 128-bit IPv6 address, which usually consists of three parts if supporting SRv6 network programmability is considered, as shown in FIG. 4.
(1) Locator is an ID assigned to a network node in the network topology for routing and forwarding data packets to the node. The locator identifies location information. The route corresponding to the locator will be issued by the node to the network through an Interior Gateway Protocol (IGP) to help other devices forward the data packets to the node that issues the locator. In the SRv6 SID, the length of Locator is variable to adapt to networks of different scales.
(2) Function is used for expressing a forwarding action to be performed by the instruction, which is equivalent to an operation code of a computer instruction. In SRv6 network programming, different forwarding behaviors are expressed by different functions, such as forwarding a data packet to a specified link, or performing table lookup and forwarding in a specified table.
(3) Arguments (referred to as "Args" for short in the below) is an optional field, and include parameters corresponding to execution of an instruction, and these parameters may include flow, service, or any other relevant information.

Further, referring to FIG. 5, the locator may be subdivided into B: N. "B" identifies an SRv6 SID block, which is generally assigned to a certain subnet by the carrier and is usually represented by a prefix. "N" represents an ID for distinguishing a node in the subnet. The SIDs in an SRv6 network all have a common prefix B, so the part B of the SIDs in an SID list is repetitive and redundant.

### (II) Introduction to the compressed SRv6 SID format

It can be seen from the standard SRv6 SID format that, in a typical application that supports SRv6 network programming, the SID format has rules, and the standard SRv6 SID format can be optimized by making full use of the rules of the SID format.

The embodiments of the present disclosure define a typical compressed 32-bit SRv6 SID format. The compressed SID may consist of a node ID and a function ID in the standard 128-bit SID.

The standard 128-bit SID format may be referred to as a full SID, which is defined as the standard SRv6 SID. The 32-bit SID is a compressed SID (or X-SID), which is the part of variation of the full SID, as shown in FIG. 6.

Similarly, a compressed 16-bit SID may also be defined. A description is given below by taking the compressed 32-bit SID as an example. It can be understood that the implementation mode of a compressed 16-bit SID is similar to that of the compressed 32-bit SID and will not be repeated here.

A conversion relationship between the full SID and the compressed SID may be as follows according to the rules of the SRv6 locator:
full SID=B (block, namely the common prefix)+N (node ID)+F (function)+A (args) (optional)+padding (optional);
compressed SID=N (node ID)+F (function).

So, the compressed SID plus the common prefix/address block can form a full SID.

To support compression, it is necessary to plan the SRv6 SID format that supports compression. For example, the common prefix is 96 bits, and the compressed SID is 32 bits. For example, the common prefix is 64 bits, the subsequent compressed SID is 32 bits, and the left low 32 bits are 0. In order to identify a specific SRv6 SID as a compressible SID, it is necessary to extend the corresponding control plane protocol to issue the compressible SID, specifically issuing the compression capability and structure information of the SID.

### (III) Introduction to the format of the container that contains the compressed SID and the standard SID

When the compressed SID and the standard SID are programmed in the SRH SID list, to accurately locate the compressed SID, the compressed SID must be programmed to in 128-bit alignment, that is, four 32-bit compressed SIDs or multiple shortened compressed SIDs of other lengths must be placed in a row of 128 bits. If the row is not fully filled, it is necessary to fill with padding to align to 128 bits.

For ease of understanding, the concept of SID container is defined in the embodiments of the present disclosure, which is a 128-bit SID container. An SID container may include:
(1) a standard SRv6 SID;
(2) multiple compressed SIDs (X-SIDs), for example, four 32-bit compressed SIDs or eight 16-bit compressed SIDs.

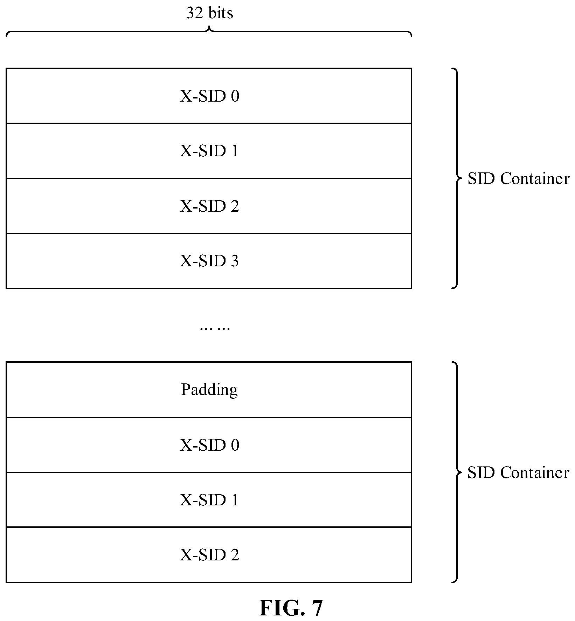

When a variety of SIDs are mixed encoded, the alignment of 128 bits is required. When the compressed SIDs cannot fully fill 128 bits, it is necessary to fill with padding. Taking the 32-bit compressed SID as an example, the possible format of SID container is shown in FIG. 7.

Since multiple types of SID containers may be encoded in the SRv6 SRH, the SRH may be called compressed SRH. It is a new implementation of SRv6, which may be called compressed SRv6. The details of the scheme of the compressed SRv6 on the data plane are described below.

### (VI) Introduction to the compressed SRH of the compressed SRv6 data plane scheme

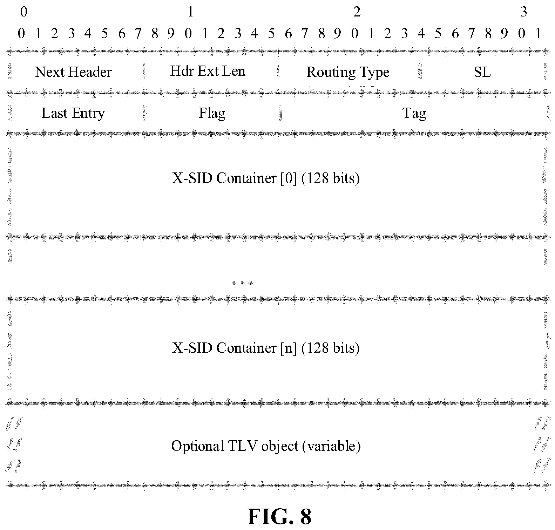

The compressed SRH is consistent with the SRH[RFC8754] format without changes to its format and field semantics, but the 128-bit SID and the 32-bit compressed SID can be mixed encoded in the compressed SRH. The format is shown in FIG. 8, including: a Next Header field, an Hdr Ext len field, a Routing Type field, an SL field, a Last Entry field, a Flags field, a Tag field, a X-SID Container field (containing a 128-bit value), and an Optional TLV object field (variable).

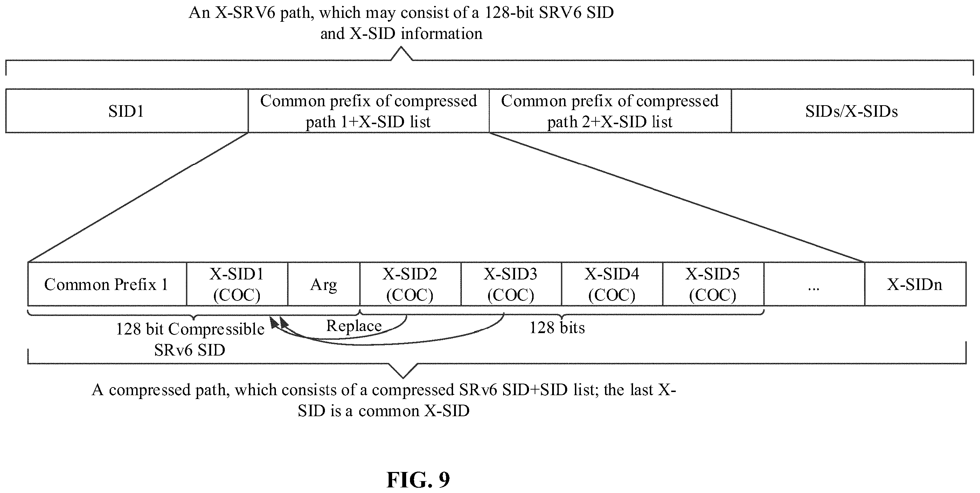

When the 128-bit SID and the 32-bit X-SID are mixed encoded in the X-SRH, an encoding example is shown in FIG. 9.

A compressed SRv6 path may consist of an SRv6 sub-path and a compressed SRv6 sub-path. The SRv6 sub-path is encoded by the SRv6 SID. The compressed SRv6sub-path consists of a starting compressible 128-bit SRv6 SID and multiple following compressed SIDs. The end of the compressed SID list must be bounded by 128 bits. The next may be a standard 128-bit SRv6 SID or a next compressed SRv6 sub-path with a different prefix.

In order to identify the start and end of the compressed SRv6 path in the SID list, that is, the boundary between the 128-bit SID and 32-bit SID, it needs to add several types of flavors and issue the corresponding SIDs of the flavors. The values of behaviors related to COC32 flavor can be seen in Table 2. The values of behaviors related to COC16 flavor are not defined temporarily.

**Table 2**

| SID flavor type | Function description |
|---|---|
| None | Not adding flavor; the default flavor of the SID indicates that the next is a 128-bit SRv6 SID |
| COC32 | Identifying that the next SID is a 32-bit compressed SID |
| COC16 | Identifying that the next SID is a 16-bit compressed SID |

Therefore, when the SID in the DA carries the COC32 flavor, it means that the next 32-bit compressed SID needs to be updated to the DA. When the SID in the DA does not carry the COC flavor SID, it means that "SL--" (SL minus 1) and the next 128-bit SID needs to be updated to the DA (when SL>0). The SL may be located to the position of the 128-bit container.

Therefore, the encoding rules of the compressed SRv6 in the SID list include the followings.
(1) The start of a compressed SRv6 path is indicated by a 128-bit COC32 flavor SID, which contains a COC32 flavor SID. This SID carries the complete SID information, including the common prefix and other information, and may be used for restoring the complete next SID with the subsequent compressed SID.
(2) All the compressed SIDs in the middle of the compressed path are the compressed SIDs carrying COC32, indicating that the next one is a 32-bit compressed SID.
(3) The last compressed SID of the compressed path is a 32-bit compressed SID without a COC flavor for indicating the end of the compressed path. The SRv6 SID combined in the DA is processed according to the processing rules of the 128-bit SID.

It is to be noted that the last SID has no COC flavor SID because after it is updated to the DA, the SID in the DA does not have the COC flavor, then it will be processed by the node as a 128-bit SID, which is consistent with the processing of the current SRv6. Therefore, it can be used for identifying the end of the compressed path, and switching from the 32-bit compressed SID to the 128-bit SID for processing.

It can be understood that this design can well support the following two scenarios:
(1) in a mixed encoding scenario, the compressed path ends, and it is switched from the 32-bit SID to the 128-bit SID;
(2) in a pure compression encoding scenario, the last SID has no COC flavor, so the processing of the last hop is consistent with the current SRv6, which is more compatible.

Moreover, in the compressed path, in order to locate the next compressed SID, the index of the compressed ID (X-SID Index, referred to as XI for short in the below) may be added to locate the position of the SID in the SID container. Further, the index may also indicate whether the SID is compressed or the SID type of the SID.

The basic idea of location is as follows:
First, the next compressed SID is located by SL+XI, the SL is located to the position of a 128-bit container, and the XI is located to the position of the X-SID in the 128-bit container.

Second, in the mixed encoding scenario, how to locate the boundary of the SID with a variable length:
(1) it is determined whether the SID type has changed by comparing "the SID type of the next SID" of the SID with the SID type of the current SID; for example, if "the SID type of the next SID" of the SID is 32-bit and the type of the current SID is 128-bit, the boundary is reached;
(2) the XI in the DA is changed correspondingly to locate the next SID/X-SID;
(3) if the SID type of the next SID is 32-bit, the next 32-bit X-SID is updated to the position of the X-SID corresponding to the IPv6 DA; the X-SID may be located by SRH[SL][XI].

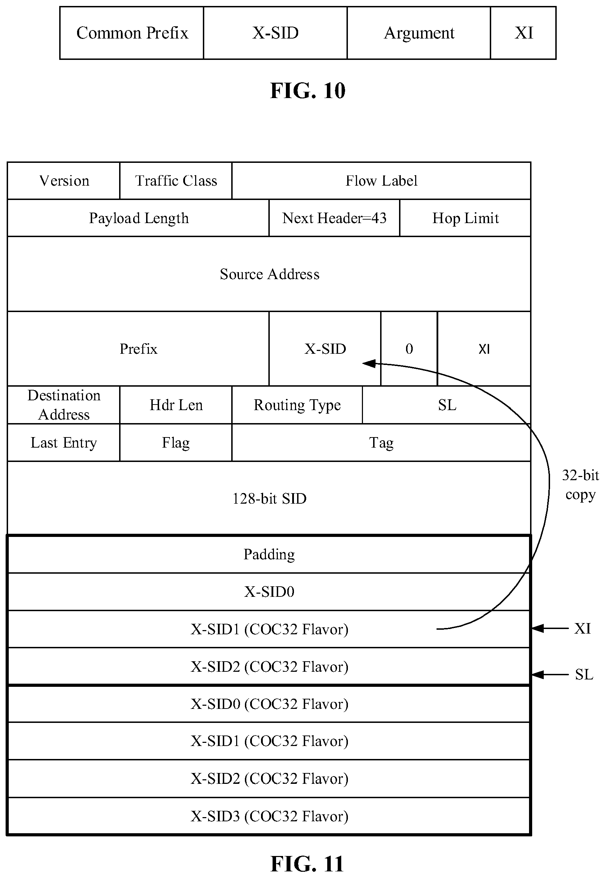

For example, the index may be placed after the compressed SID in the DA. Exemplarily, the index is placed at 2 Least Significant Bits (LSBs) of 128 bits, as shown in FIG. 10. When the compressed SID is issued, it needs to reserve space for the index, which has a value of 0. During forwarding, the value of XI is the location flavor of the compressed SID, indicating its position in the X-SID container.

For example, it is indicated through the COC32 flavor SID to update the next 32-bit compressed SID to the DA, and the position of the compressed SID may be located by the SL and the XI.

Taking the 32-bit compressed SID as an example, processing pseudo-codes of the data packet received by the node (endpoint) are as follows:

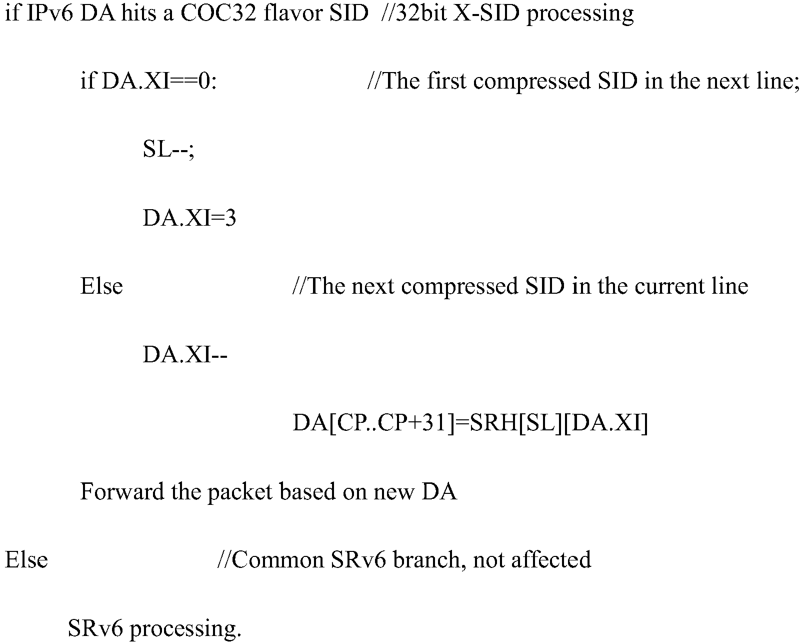

The processing flow is triggered by the COC flavor SID, and operation data is limited to the COC flavor SID. The existing main SRv6 process is not affected, and the processing of the existing SID and SRH is not affected. The format is compatible with the SRH, and the processing is compatible with the existing SRv6. The XI is after the compressed SID of the DA. Taking the pure compressed path+128-bit VPN SID as an example, an example of encoding and X-SID update is shown in FIG. 11.

### (V) Data packet forwarding process in a mixed encoding scenario

When deploying an SRv6 compression scheme, it needs to perform address planning and then upgrade a control plane and a data plane to support the SRv6 compression.

First, the node sets the extended C-flag of SRv6 Capabilities TLV of IGP and other protocols to identify that the node supports the compression capability.

The node instantiates the SRv6 SID that may support compression, and issues the SID to the network or to a controller through IGP, BGP, BGP-LS and other protocols. After instantiating the SID, the node generates a corresponding SID forwarding table entry.

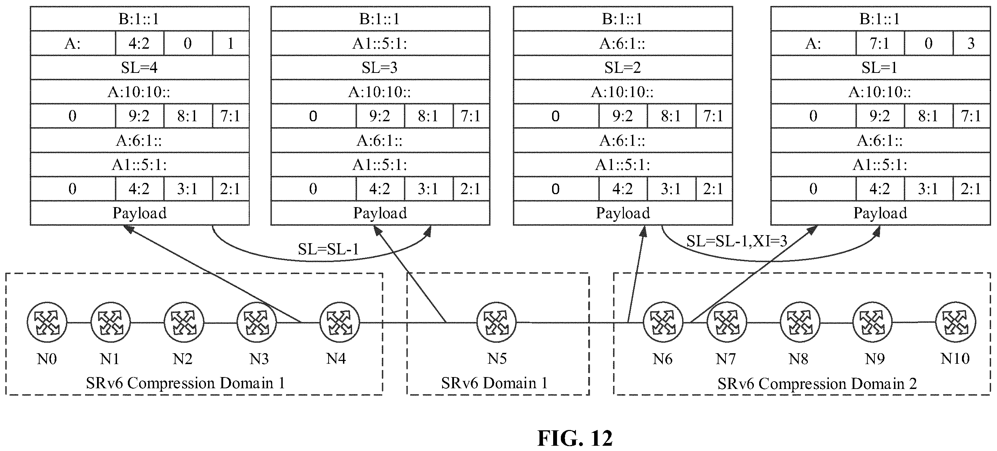

Referring to FIG. 12, node k may issue two sets of SIDs; both of the two sets of SIDs carry C-Flag and support compression. One of the two sets of SIDs carries the COC32 flavor, and the other does not carry the flavor. For example, A:k:1:: is an END.X SID carrying the COC32 flavor and bound to an interface, and A:k:2:: is an END.X SID not carrying the COC32 flavor and bound to the same interface. According to the planning, A:1:1:: is a COC32 flavor End.X SID, and A:4:2:: is an SID without COC flavor.

When issuing the SID, it needs to set the C-flag in the TLV (e.g. SRv6 End SID sub-TLV, SRv6 End.X SID sub-TLV, and SRv6 LAN End.X SID sub-TLV) corresponding to SID A:1:1::, A:2:1::, A:3:1::, A:4:1::, A:4:2::, A:6:1::, A:7:1::, A:8:1::, A:9:1::, A:9:2:: and A:10:10:: (the formats support the compressed VPN SID, which facilitates the demonstration of a pure compression case) to identify that the format of the SID supports compression.

The issued SID includes a compressible SID carrying the COC32 flavor to identify that the SID is followed by one or more 32-bit X-SIDs, for example, multiple SIDs A:k:1:: in the following example.

A:k:1:: also needs to carry SID Structure Sub-sub-TLV when issued. Assuming the length of Common Prefix (A) is 64, the length of X-SID is 32 (the length of Node ID is 16, and the length of Function ID is 16), and the length of Argument is 32, then in the SID Structure Sub-sub-TLV of the issued SID, the length of Locator Block is 64, the length of Node ID is 16, the length of Function is 16, and the length of Argument is 32.

In the figure, the prefix of A1:: is a prefix that does not support the compressed SID, so A1::5:1 is an incompressible SID. It will also carry the SID Structure Sub-sub-TLV, in which the length of Locator Block is 64, the length of Node ID is 16, and the length of Function is 48.

A device sends, through BGP-LS, the capability of supporting compression of a node, the SID supporting compression, and the newly added SID carrying the COC32 flavor to a controller for path calculation.

After completing path calculation, the controller may issue the SID list containing the compressed SID through a BGP SR policy. In this case, a sub-TLV describing the SID format needs to be inserted between the segment sub-TLVs of the SID list. For example, for ten SIDs in the following example, SID encoding sub-TLV needs to be inserted before A:2:1:: and A:7:1::; the start of the SID encoding sub-TLV is the length (63 in the figure) of Common Prefix, and the end of the SID encoding sub-TLV is the length of Common Prefix+32 (95 in the figure). SID encoding sub-TLV also needs to be inserted before A1::5:1 and A:10:10::, the start of the SID encoding sub-TLV is equal to 0, and the end of the SID encoding sub-TLV is equal to 127.

**Table 3**

| SID | Block | Node | Function | Arg | Padding | Notes |
|---|---|---|---|---|---|---|
| A:k:1:: | 64 | 16 | 16 | 32 | 0 | Compressible, COC32 flavor |
| A:k:2:: | 64 | 16 | 16 | 32 | 0 | Compressible, None COC flavor |
| A1:5::1 | 64 | 16 | 48 | 0 | 0 | Incompressible, A1 prefix |
| A:10:10:: | 64 | 16 | 16 | 32 | 0 | Compressible VPN SID |

In the example, the SID list contains a total of ten SIDs:
A:1:1:: END.X (COC32)
A:2:1:: END.X (COC32)
A:3:1:: END.X (COC32)
A:4:2:: END.X
A1::5:1 END.X which is an SID that does not support compression
A:6:1:: END.X (COC32)
A:7:1:: END.X (COC32)
A:8:1:: END.X (COC32)
A:9:2:: END.X (COC32)
A:10:10:: END.DT4 VPN SID (not participating in compression).

After reduced-mode and compression encoding, the SID list is shown in FIG. 12. End. X SID A:1:1:: is not encoded in the SID list.
(1) When node 1 receives a data packet, the DA "A:1:1::" hits the COC flavor END.X SID locally issued by the node in the local SID list; in this case, in the SRH, SL=5 and DA.XI=0, so SL--, and DA.XI=3, which points to 2:1, and then the X-SID 2:1 is updated to the DA and forwarded to the next node 2. At this point, the DA is A:2:1::3.
(2) When node 2 receives a data packet, the DA "A:2:1:3:: " hits and matches the COC flavor END.X SID locally issued by the node in the local SID list; in this case, SL=4, and DA.XI is 3 which is greater than 0, so the node performs DA.XI--, and updates (or copies) the next X-SID 3:1 to which SRH[SL][DA.XI] points to the DA and forwards it to the next node. At this point, the DA is A:3:1::2.
(3) When node 3 receives a data packet, the DA "A:3:1:2::" hits the COC flavor END.X SID locally issued by the node in the local SID list; in this case, in the SRH, SL=4 and DA.XI=2 which is greater than 0, so DA.XI--, which points to 4:2, and then the X-SID 4:2 is updated to the DA and forwarded to the next node. At this point, the DA is A:4:2::1.
(4) When node 4 receives a data packet, the DA "A:4:2:1::" hits the END.X SID locally issued by the node in the local SID list; because there is no COC flavor, the next SID is the 128-bit SID by default; therefore, SL=SL-1=3, and "A1::5:1" is copied to the DA for forwarding.
(5) Node 5 is a common SRv6 node, so common SRv6 forwarding is performed to copy "A:6:1::" to the DA and forward it to the next node.
(6) When node 6 receives a data packet, the DA "A:6:1::" hits the COC flavor END.X SID locally issued by the node in the local SID list; in this case, in the SRH, SL=2 and DA.XI=0, so SL--, and DA.XI=3, which points to 7:1, and then the X-SID 7:1 is updated to the DA and forwarded to the next node. At this point, the DA is A:7:1::3.
   It can be understood that "7:1" is equivalent to the first SID, and "A:6:1::" is equivalent to the second SID.
(7) Similarly, when receiving a data packet, node 7 and node 8 process the COC flavor SID, update the DA, and forward the data packet.
(8) After receiving a data packet, node 9 performs the same procedure as node 4; because the DA hits the SID without the COC flavor in the local SID table, SL-- is equal to 0, and VPN SID is copied to the DA and forwarded to node 10.
(9) Node 10 performs processing according to the normal VPN SID.

### (VI) Data packet forwarding process in a pure compression scenario

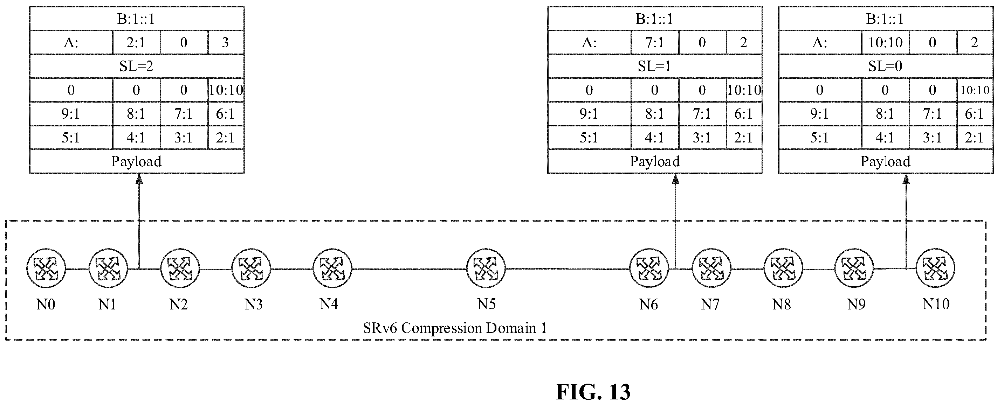

Referring to FIG. 13, the control plane process principle, topology information and SID information are the same as that of the mixed encoding case. When an SR policy is issued, it is necessary to insert a corresponding SID encoding sub-TLV description format in the SID list of the BGP SR policy. Taking the following as an example:
the SID encoding sub-TLV needs to be inserted before A:2:1::; the start of the SID encoding sub-TLV is the length (63 in the figure) of Common Prefix, and the end of the SID encoding sub-TLV is the length of Common Prefix+32 (95 in the figure).

In the example, the SID list contains a total of ten SIDs:
A:1:1:: END.X (COC32)
A:2:1:: END.X (COC32)
A:3:1:: END.X (COC32)
A:4:1:: END.X (COC32)
A:5:1:: END.X (COC32)
A:6:1:: END.X (COC32)
A:7:1:: END.X (COC32)
A:8:1:: END.X (COC32)
A:9:1:: END.X (COC32)
A:10:10:: END.DT4 VPN SID (participating in compression).

After the reduced mode and compression encoding, the SID list is shown in FIG. 13. End. X SID A:1:1:: is not encoded in the SID list.
(1) After encapsulating a data packet, a node 0 sends the data packet to the next hop node 1; in this case, SL=3 and DA.XI=0 in the SRH. The flavor of SID is COC, which identifies that the encapsulation format of the next SID is the 32-bit X-SID.
(2) When node 1 receives a data packet, the DA "A:1:1::" is the locally issued COC flavor END.X whose format supports compression, which indicates that the next SID is a 32-bit X-SID; in this case, SL=3, and DA.XI=0, so SL--, and DA.XI=3, which points to 2:1; 2:1 is copied to the DA to update the X-SID, and then table lookup and forwarding are performed based on the new DA.
   It can be understood that "2:1" is equivalent to the first SID, and "1:1" is equivalent to the second SID.
(3) Similarly, for subsequent nodes 2, 3, 4, 5, 6, 7, 8, and 9, the nodes update the corresponding X-SID to the DA based on the values of SL and DA.XI, and perform table lookup and forwarding.
(4) When node 10 receives a data packet, the DA is "A:10:10::", which is an SID without COC flavor (the VPN SID itself has no such flavor) and the node performs processing of the VPN SID.

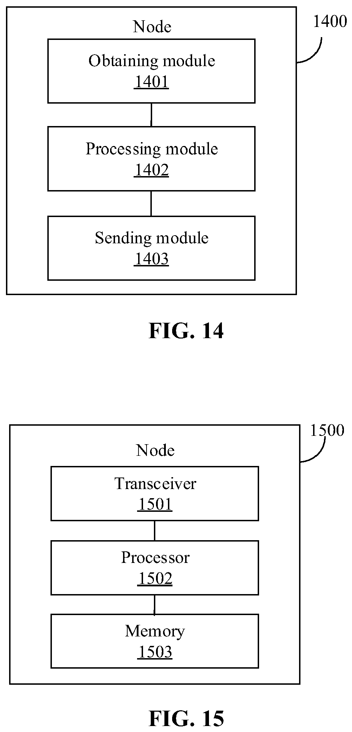

Referring to FIG. 14, the present disclosure further provide a node not being part of the invention. The node 1400 may include: an obtaining module 1401, a processing module 1402, and a sending module 1403.

The obtaining module 1401 is configured to obtain first information and second information of a first SID, the first information being used for indicating a position of a container where the first SID is located in a SID list of a data packet, and the second information being used for indicating a position of the first SID in the container.

The processing module 1402 is configured to obtain a position of the first SID in the SID list according to the first information and the second information.

The sending module 1403 is configured to copy the first SID to a DA of the data packet, and send the data packet.

In some implementation modes, the obtaining module 1401 is configured to: obtain third information and fourth information of a second SID, the third information being used for indicating a position of a container where the second SID is located in the SID list of the data packet, and the fourth information being used for indicating a position of the second SID in the container; and obtain the first information and the second information of the first SID according to the third information and the fourth information of the second SID. The second SID is an SID immediately before the first SID in the SID list.

In some implementation modes, the obtaining module 1401 is configured to: obtain the third information of the second SID from an SRH of the data packet; and obtain an index of the second SID from the DA of the data packet. The index of the second SID includes the fourth information.

In some implementation modes, the obtaining module 1401 is configured to: determine whether the first SID and the second SID are in the same container according to the fourth information or flavor of the second SID; if the first SID and the second SID are in the same container, the first information of the first SID is the same as the third information of the second SID, and obtain the second information of the first SID according to the fourth information of the second SID; or, if the first SID and the second SID are not in the same container, obtain the first information of the first SID according to the third information of the second SID, and determine the second information of the first SID according to the SID type of the first SID.

In some implementation modes, the SID type of the first SID is indicated by the flavor of the second SID.

In some implementation modes, the node 1400 may further include: an updating module, which is configured to: update the first information of the first SID to the SRH of the data packet; and update the second information of the first SID to the DA of the data packet as the index of the first SID.

In some implementation modes, the obtaining module 1401 is configured to: obtain the third information, the fourth information and fifth information of the second SID, the third information being used for indicating the position of the container where the second SID is located in the SID list of the data packet, the fourth information being used for indicating the position of the second SID in the container, and the fifth information being used for indicating the SID type of the second SID and/or indicating whether the second SID is compressed; and obtain the first information and the second information of the first SID according to the third information, the fourth information and the fifth information of the second SID. The second SID is an SID immediately before the first SID in the SID list.

In some implementation modes, the obtaining module 1401 is configured to: obtain the third information of the second SID from the SRH of the data packet; and obtain the index of the second SID from the DA of the data packet. The index of the second SID includes the fourth information and the fifth information.

In some implementation modes, the obtaining module 1401 is configured to: determine whether the first SID and the second SID are in the same container according to the SID type of the second SID and the SID type of the first SID; if the first SID and the second SID are in the same container, the first information of the first SID is the same as the third information of the second SID, and obtain the second information of the first SID according to the fourth information of the second SID; or, if the first SID and the second SID are not in the same container, obtain the first information of the first SID according to the third information of the second SID, and determine the second information of the first SID according to the SID type of the first SID.

In some implementation modes, the container is used for containing multiple compressible SIDs. The compressible SID includes the node ID and the value of function of the node.

In some implementation modes, the sending module 1403 is configured to: copy the first SID to the DA of the data packet, combine the first SID with the common prefix or address block in the DA to get a new DA, and forward the data packet to a next endpoint according to the new DA; or, copy the first SID and the second information to the DA of the data packet, combine the first SID and the second information with the common prefix or address block in the DA to get a new DA, and forward the data packet to the next endpoint according to the new DA; or, copy the first SID and the second information to the DA of the data packet, and forward the data packet to the next endpoint.

It is to be noted that when the node provided by the embodiments performs data packet processing, the apparatus is illustrated only by the division of each program module mentioned above. In practical applications, the above processing may be assigned to different program modules to complete according to needs, that is, the internal structure of the node is divided into different program modules to complete all or part of the processing described above. In addition, the node and the method for data packet processing provided in the above embodiments belong to the same concept, and details about a specific implementation process thereof refer to the method embodiments, and will not be elaborated herein.

Referring to FIG. 15, an embodiment of the present disclosure further provides a node. The node 1500 includes: a transceiver 1501, a processor 1502, and a memory 1503 configured to store a computer program capable of running in the processor 1502.

The transceiver 1501 is configured to send and receive data under control of the processor 1502.

When reading the computer program in the memory 1503, the processor 1502 executes the steps of the method for data packet processing described in the above embodiments of the present disclosure.

It can be understood that the memory 1503 may be a volatile memory or a nonvolatile memory, or may include both the volatile and nonvolatile memories. The nonvolatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface storage, a compact disc, or a Compact Disc Read-Only Memory (CD-ROM). The magnetic surface memory may be a disk memory or a tape memory. The volatile memory may be a RAM, and is used as an external high-speed cache. It is exemplarily but unlimitedly described that RAMs in various forms may be adopted, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM) and a Direct Rambus Random Access Memory (DRRAM). The memory 1503 described in the embodiment of the disclosure is intended to include, but not limited to, memories of these and any other proper types.

The method disclosed in the embodiments of the disclosure is applied to the processor 1502 or implemented by the processor 1502. The processor 1502 may be an integrated circuit chip with a signal processing capability. In an implementation process, the steps of the method may be accomplished by an integrated logic circuit of hardware in the processor 1502 or an instruction in a software form. The processor 1502 may be a universal processor, a Digital Signal Processor (DSP) or another Programmable Logic Device (PLD), a discrete gate or transistor logic device, a discrete hardware component, etc. The processor 1502 may implement or execute each method, step and logical block diagram disclosed in the embodiments of the disclosure. The universal processor may be a microprocessor, any conventional processor or the like. The steps of the method disclosed in combination with the embodiments of the disclosure may be directly embodied to be executed and completed by a hardware decoding processor or executed and completed by a combination of hardware and software modules in the decoding processor. The software module may be located in a storage medium, and the storage medium is located in the memory 1503. The processor 1502 reads information in the memory 1503 and completes the steps of the method in combination with hardware.

In an exemplary embodiment, the node may be realized by one or more Application Specific Integrated Circuits (ASICs), DSPs, Programmable Logic Devices (PLDs), Complex Programmable Logic Devices (CPLDs), Field-Programmable Gate Array (FPGAs), universal processors, controllers, Micro Controller Units (MCUs), microprocessors, or other electronic components, and is configured to execute the above method.

An embodiment of the present disclosure further provides a computer-readable storage medium, for example, a memory 1503 including a computer program. The computer program may be executed by a processor 1502 of the node 1500 to complete the steps of the above method. The computer-readable storage medium may be, but is not limited to, an FRAM, an ROM, a PROM, an EPROM, an EEPROM, a flash memory, a magnetic surface storage, a compact disc, or a CD-ROM, and may also be a variety of devices including one or any combination of the above memories.

An embodiment of the present disclosure further provides a computer-readable storage medium, in which a computer program is stored. When executed by the processor, the computer program implements the steps of the method for data packet processing in the embodiments of the present disclosure.

The characteristics disclosed in some method or device embodiments provided in the present application may be freely combined without conflicts to obtain new method embodiments or device embodiments.

The steps of the method or algorithm described in the disclosed content of the present disclosure can be implemented by hardware or by a processor executing software instructions. The software instructions may consist of corresponding software modules. The software modules may be stored in an RAM, a flash memory, an ROM, an EPROM, an EEPROM, a register, a hard disk, a mobile hard disk, a CD-ROM, or any other storage medium known in the field. An exemplary storage medium is coupled to a processor, so that the processor can read information from and write information to the storage medium. Of course, the storage medium can also be a part of the processor. The processor and the storage medium can be carried in an Application Specific Integrated Circuit (ASIC). In addition, the ASIC can be carried in a core network interface device. Of course, the processor and the storage medium can also exist as discrete components in the core network interface device.

Those skilled in the art may realize that, in one or more abovementioned examples, the functions described in the present disclosure may be realized by hardware, software, firmware or any combination thereof. In case of implementation with the software, these functions are stored in a computer-readable medium or transmitted as one or more instructions or codes in the computer-readable medium. The computer-readable medium includes a computer storage medium and a communication medium, and the communication medium includes any medium for conveniently transmitting a program from one place to another place. The storage medium may be any available medium accessible for a universal or dedicated computer.

The specific implementation methods described above further describe in detail the purposes, technical solutions and beneficial effects of the present disclosure. It should be understood that the above is only the specific implementations of the present disclosure and is not intended to limit the scope of protection of the disclosure. Any modification, equivalent replacement, improvement, etc. made on the basis of the technical solutions of the present disclosure shall fall within the scope of protection of the present disclosure.

Those skilled in the art should understand that the embodiments of the present disclosure may be provided as a method, a system or a program product Therefore, the embodiment of the disclosure may use form of a pure hardware embodiment, a pure software embodiment, or an embodiment combining software and hardware. Moreover, the embodiment of the disclosure may use form of a program product implemented on one or more computer-available storage media (including, but not limited to, a disk memory, a Compact Disc Read-Only Memory (CD-ROM), and an optical memory) including computer-available program codes.

The embodiments of the present disclosure are described with reference to flowcharts and/or block diagrams of the method, the device (system) and the program product according to the embodiments of the present disclosure. It is to be understood that each flow and/or block in the flowcharts and/or the block diagrams and combinations of the flows and/or blocks in the flowcharts and/or the block diagrams may be implemented by program instructions. These program instructions can be provided to a processor of a general-purpose computer, a special-purpose computer, an embedded processor or other programmable data processing devices to generate a machine, so that instructions which are executed by the processor of the computer or other programmable data processing devices generate a device which is used for implementing the specified functions in one or more flows of the flowchart and/or one or more blocks of the block diagram.

These program instructions may further be stored in the computer-readable memory which can guide the computer or other programmable data processing devices to work in a particular way, so that the instructions stored in the computer-readable memory generate a product including an instruction device. The instruction device implements the specified functions in one or more flows of the flowchart and/or one or more blocks of the block diagram.

These program instructions may also be loaded on the computer or other programmable data processing devices, so that a series of operation steps are performed on the computer or other programmable data processing devices to generate the processing implemented by the computer, and the instructions executed on the computer or other programmable data processing devices provide the steps for implementing the specified functions in one or more flows of the flowchart and/or one or more blocks of the block diagram.

## Claims

1. A data packet processing method, comprising:
obtaining (301) first information and second information of a first Segment ID, SID, the first information being used for indicating a position of a container where the first SID is located in an SID list of a data packet, and the second information being used for indicating a position of the first SID in the container where the first SID is located, wherein the SID list comprises a plurality of containers, and at least one of the plurality of containers is used for containing multiple compressed SIDs; and when one of the plurality of containers is not fully filled by the multiple compressed SIDs, the one of the plurality of containers comprises padding bits;
obtaining (302) a position of the first SID in the SID list according to the first information and the second information; and
copying (303) the first SID to a Destination Address, DA, of the data packet, and sending the data packet;
the method being **characterized in that** obtaining (301) the first information and the second information of the first SID comprises:
obtaining third information, fourth information and fifth information of a second SID, the third information being used for indicating a position of a container where the second SID is located in the SID list of the data packet, the fourth information being used for indicating a position of the second SID in the container where the second SID is located, and the fifth information being used for indicating at least one of: an SID type of the second SID, or whether the second SID is compressed; and
obtaining the first information and the second information of the first SID according to the third information, the fourth information and the fifth information of the second SID;
wherein the second SID is an SID immediately before the first SID in the SID list.

2. The method of claim 1, further comprising:
updating the first information of the first SID to a Segment Routing Header, SRH, of the data packet; and
updating the second information of the first SID to the DA of the data packet as an index of the first SID.

3. The method of claim 1, wherein copying the first SID to the DA of the data packet, and sending the data packet comprises:
copying the first SID to the DA of the data packet, combining the first SID with a common prefix or an address block in the DA to get a new DA, and forwarding the data packet to a next endpoint according to the new DA;
or,
copying the first SID and the second information to the DA of the data packet, combining the first SID and the second information with the common prefix or the address block in the DA to get the new DA, and forwarding the data packet to a next endpoint according to the new DA;
or,
copying the first SID and the second information to the DA of the data packet, and forwarding the data packet to the next endpoint.

4. The method of claim 1, wherein obtaining the third information, the fourth information and the fifth information of the second SID comprises:
obtaining the third information of the second SID from a Segment Routing Header, SRH, of the data packet; and
obtaining an index of the second SID from the DA of the data packet, wherein the index of the second SID comprises the fourth information and the fifth information.

5. The method of claim 1, wherein obtaining the first information and the second information of the first SID according to the third information, the fourth information and the fifth information of the second SID comprises:
determining whether the first SID and the second SID are in a same container according to the SID type of the second SID and an SID type of the first SID;
in response to the first SID and the second SID being in the same container, the first information of the first SID being the same as the third information of the second SID, and obtaining the second information of the first SID according to the fourth information of the second SID; or,
in response to the first SID and the second SID not being in the same container, obtaining the first information of the first SID according to the third information of the second SID, and determining the second information of the first SID according to the SID type of the first SID.

6. The method of claim 1, wherein each of the plurality of containers has a length equal to a length of a standard SID, and each of the multiple compressed SIDs comprises a node ID and a value of function of a node.

7. The method of claim 1, wherein the first SID is a compressed SID, and an index of the first SID is placed after the compressed SID in the DA.

8. The method of claim 7, wherein the index of the first SID is placed at 2 Least Significant Bits, LSBs, of the DA.

9. A node (1500), comprising a transceiver (1501), a processor (1502) and a memory (1503) the node being configured to store a computer program capable of running in the processor (1502); wherein
the transceiver (1501) is configured to send and receive data under control of the processor (1502); and
the processor (1502) is configured to execute, when reading the computer program in the memory (1503), steps in the method for data packet processing of any one of claims 1 to 8.

10. A computer-readable storage medium, in which a computer program is stored, wherein the computer program, when executed by a processor, executes steps in the method for data packet processing of any one of claims 1 to 8.

## Patentansprüche

1. Verfahren zur Verarbeitung von Datenpaketen, umfassend:
Erhalten (301) von ersten Informationen und zweiten Informationen einer ersten Segment-ID, SID, wobei die ersten Informationen zum Angeben einer Position eines Containers verwendet werden, in dem sich die erste SID in einer SID-Liste eines Datenpakets befindet, und die zweiten Informationen zum Angeben einer Position der ersten SID in dem Container verwendet werden, in dem sich die erste SID befindet, wobei die SID-Liste eine Mehrzahl von Containern umfasst, und wenigstens einer aus der Mehrzahl von Containern zum Enthalten mehrerer komprimierter SIDs verwendet wird; und wenn einer der Mehrzahl von Containern nicht vollständig durch die mehreren komprimierten SIDs gefüllt ist, der eine aus der Mehrzahl von Containern Füllbits umfasst;
Erhalten (302) einer Position der ersten SID in der SID-Liste gemäß den ersten Informationen und den zweiten Informationen; und
Kopieren (303) der ersten SID in eine Zieladresse, DA, des Datenpakets und Senden des Datenpakets;
wobei das Verfahren **dadurch gekennzeichnet ist, dass** das Erhalten (301) der ersten Informationen und der zweiten Informationen der ersten SID umfasst:
Erhalten von dritten Informationen, vierten Informationen und fünften Informationen einer zweiten SID, wobei die dritten Informationen zum Angeben einer Position eines Containers verwendet werden, in dem sich die zweite SID in der SID-Liste des Datenpakets befindet, wobei die vierten Informationen zum Angeben einer Position einer zweiten SID in dem Container verwendet werden, an der sich die zweite SID befindet, und die fünften Informationen zum Angeben von wenigstens einem verwendet werden von: einer SID-Art der zweiten SID, oder ob die zweite SID komprimiert ist; und
Erhalten von ersten Informationen und zweiten Informationen der ersten SID gemäß den dritten Informationen, den vierten Informationen und den fünften Informationen der zweiten SID,
wobei die zweite SID eine SID direkt vor der ersten SID in der SID-Liste ist.

2. Verfahren nach Anspruch 1, ferner umfassend:
Aktualisieren der ersten Informationen der ersten SID auf einen Segment-Routing-Header, SRH, des Datenpakets; und
Aktualisieren der zweiten Informationen der ersten SID auf den DA des Datenpakets als einen Index der ersten SID.

3. Verfahren nach Anspruch 1, wobei das Kopieren der ersten SID in den DA des Datenpakets und das Senden des Datenpakets umfasst:
Kopieren der ersten SID in den DA des Datenpakets, Kombinieren der ersten SID mit einem gemeinsamen Präfix oder einem Adressblock in dem DA, um einen neuen DA zu erhalten, und Weiterleiten des Datenpakets an einen nächsten Endpunkt gemäß dem neuen DA;
oder,
Kopieren der ersten SID und der zweiten Informationen in den DA des Datenpakets, Kombinieren der ersten SID und der zweiten Informationen mit dem gemeinsamen Präfix oder dem Adressblock in dem DA, um den neuen DA zu erhalten, und Weiterleiten des Datenpakets an einen nächsten Endpunkt gemäß dem neuen DA;
oder,
Kopieren der ersten SID und der zweiten Informationen in den DA des Datenpakets, und Weiterleiten des Datenpakets an den nächsten Endpunkt.

4. Verfahren nach Anspruch 1, wobei das Erhalten der dritten Informationen, der vierten Informationen und der fünften Informationen der zweiten SID umfasst:
Erhalten der dritten Informationen der zweiten SID aus einem Segment-Routing-Header, SRH, des Datenpakets; und
Erhalten eines Index der zweiten SID aus dem DA des Datenpakets, wobei der Index der zweiten SID die vierten Informationen und die fünften Informationen umfasst.

5. Verfahren nach Anspruch 1, wobei das Erhalten der ersten Informationen und der zweiten Informationen der ersten SID gemäß den dritten Informationen, den vierten Informationen und den fünften Informationen der zweiten SID umfasst:
Bestimmen, ob sich die erste SID und die zweite SID in einem gleichen Container befinden, gemäß der SID-Art der zweiten SID und einer SID-Art der ersten SID,
als Reaktion darauf, dass die erste SID und die zweite SID in demselben Container sind, die ersten Informationen der ersten SID dieselbe ist wie die dritten Informationen der zweiten SID, und das Erhalten der zweiten Informationen der ersten SID gemäß der vierten Informationen der zweiten SID, oder,
als Reaktion darauf, dass die erste SID und die zweite SID sich nicht in demselben Container befinden, Erhalten der ersten Informationen der ersten SID gemäß den dritten Informationen der zweiten SID, und Bestimmen der zweiten Informationen der ersten SID gemäß der SID-Art der ersten SID.

6. Verfahren nach Anspruch 1, wobei jeder der Mehrzahl von Containern eine Länge aufweist, die einer Länge einer Standard-SID entspricht, und jede der mehreren komprimierten SIDs eine Knoten-ID und einen Wert der Funktion eines Knotens umfasst.

7. Verfahren nach Anspruch 1, wobei die erste SID eine komprimierte SID ist, und ein Index der ersten SID nach der komprimierten SID in dem DA platziert wird.

8. Verfahren nach Anspruch 7, wobei der Index der ersten SID bei 2 niederwertigsten Bits, LSBs, des DA platziert wird.

9. Knoten (1500), umfassend:
einen Sendeempfänger (1501), einen Prozessor (1502) und einen Speicher (1503), wobei der Knoten dazu konfiguriert ist, ein Computerprogramm zu speichern, das auf dem Prozessor (1502) ausgeführt werden kann;
wobei der Sendeempfänger (1501) dazu konfiguriert ist, Daten unter der Steuerung des Prozessors (1502) zu senden und zu empfangen; und
der Prozessor (1502) dazu konfiguriert ist, wenn er das Computerprogramm in dem Speicher (1503) liest, Schritte in dem Verfahren zum Verarbeiten von Datenpaketen nach einem der Ansprüche 1 bis 8 auszuführen.

10. Computerlesbares Speichermedium, in dem ein Computerprogramm gespeichert wird, wobei das Computerprogramm, wenn es durch einen Prozessor ausgeführt wird, Schritte in dem Verfahren zum Verarbeiten von Datenpaketen nach einem der Ansprüche 1 bis 8 ausführt.

## Revendications

1. Procédé de traitement paquets de données, comprenant :
l'obtention (301) de premières informations et de deuxièmes informations d'un premier identifiant de segment, SID, les premières informations étant utilisées pour indiquer une position d'un conteneur où le premier SID est situé dans une liste de SID d'un paquet de données, et les deuxièmes informations étant utilisées pour indiquer une position du premier SID dans le conteneur où le premier SID est situé, dans lequel la liste de SID comprend une pluralité de conteneurs, et au moins l'un de la pluralité de conteneurs est utilisé pour contenir de multiples SID compressés ; et lorsque l'un de la pluralité de conteneurs n'est pas entièrement rempli par les multiples SID compressés, ledit un de la pluralité de conteneurs comprend des bits de remplissage ;
l'obtention (302) d'une position du premier SID dans la liste de SID selon les premières informations et les deuxièmes informations ; et
la copie (303) du premier SID dans une adresse de destination, DA, du paquet de données, et l'envoi du paquet de données ;
le procédé étant **caractérisé en ce que** l'obtention (301) des premières informations et des deuxièmes informations du premier SID comprend :
l'obtention de troisièmes informations, de quatrièmes informations et de cinquièmes informations d'un deuxième SID, les troisièmes informations étant utilisées pour indiquer une position d'un conteneur où le deuxième SID est situé dans la liste de SID du paquet de données, les quatrièmes informations étant utilisées pour indiquer une position du deuxième SID dans le conteneur où le deuxième SID est situé, et les cinquièmes informations étant utilisées pour indiquer au moins l'un parmi : un type de SID du deuxième SID, ou le fait que le deuxième SID est compressé ou non ; et
l'obtention des premières informations et des deuxièmes informations du premier SID selon les troisièmes informations, les quatrièmes informations et les cinquièmes informations du deuxième SID ;
dans lequel le deuxième SID est un SID immédiatement avant le premier SID dans la liste de SID.

2. Procédé selon la revendication 1, comprenant en outre :
la mise à jour des premières informations du premier SID dans un en-tête de routage de segment, SRH, du paquet de données ; et
la mise à jour des deuxièmes informations du premier SID dans la DA du paquet de données en tant qu'index du premier SID.

3. Procédé selon la revendication 1, dans lequel la copie du premier SID dans la DA du paquet de données, et l'envoi du paquet de données comprennent :
la copie du premier SID dans la DA du paquet de données, la combinaison du premier SID avec un préfixe commun ou un bloc d'adresse dans la DA pour avoir une nouvelle DA, et le transfert du paquet de données à un point d'extrémité suivant selon la nouvelle DA ;
ou,
la copie du premier SID et des deuxièmes informations dans la DA du paquet de données, la combinaison du premier SID et des deuxièmes informations avec le préfixe commun ou le bloc d'adresse dans la DA pour avoir la nouvelle DA, et le transfert du paquet de données à un point d'extrémité suivant selon la nouvelle DA ;
ou,
la copie du premier SID et des deuxièmes informations dans la DA du paquet de données, et le transfert du paquet de données au point d'extrémité suivant.

4. Procédé selon la revendication 1, dans lequel l'obtention des troisièmes informations, des quatrièmes informations et des cinquièmes informations du deuxième SID comprend :
l'obtention des troisièmes informations du deuxième SID à partir d'un en-tête de routage de segment, SRH, du paquet de données ; et
l'obtention d'un index du deuxième SID à partir de la DA du paquet de données, dans lequel l'index du deuxième SID comprend les quatrièmes informations et les cinquièmes informations.

5. Procédé selon la revendication 1, dans lequel l'obtention des premières informations et des deuxièmes informations du premier SID selon les troisièmes informations, les quatrièmes informations et les cinquièmes informations du deuxième SID comprend :
la détermination du fait que le premier SID et le deuxième SID sont ou non dans un même conteneur selon le type de SID du deuxième SID et un type de SID du premier SID ;
en réponse au fait que le premier SID et le deuxième SID sont dans le même conteneur, la détermination du fait que les premières informations du premier SID sont les mêmes que les troisièmes informations du deuxième SID, et l'obtention des deuxièmes informations du premier SID selon les quatrièmes informations du deuxième SID ; ou,
en réponse au fait que le premier SID et le deuxième SID ne sont pas dans le même conteneur, l'obtention des premières informations du premier SID selon les troisièmes informations du deuxième SID, et la détermination des deuxièmes informations du premier SID selon le type de SID du premier SID.

6. Procédé selon la revendication 1, dans lequel chacun de la pluralité de conteneurs a une longueur égale à une longueur d'un SID ordinaire, et chacun des multiples SID compressés comprend un identifiant de nœud et une valeur de fonction d'un nœud.

7. Procédé selon la revendication 1, dans lequel le premier SID est un SID compressé, et un index du premier SID est placé après le SID compressé dans la DA.

8. Procédé selon la revendication 7, dans lequel l'index du premier SID est placé au niveau de 2 bits les moins significatifs, LSB, de la DA.

9. Nœud (1500), comprenant
un émetteur-récepteur (1501), un processeur (1502) et une mémoire (1503), le nœud étant configuré pour stocker un programme d'ordinateur capable de s'exécuter dans le processeur (1502) ; dans lequel
l'émetteur-récepteur (1501) est configuré pour envoyer et recevoir des données sous la commande du processeur (1502) ; et
le processeur (1502) est configuré pour exécuter, lors de la lecture du programme d'ordinateur dans la mémoire (1503), des étapes dans le procédé de traitement de paquets de données de l'une quelconque des revendications 1 à 8.

10. Support de stockage lisible par ordinateur, dans lequel est stocké un programme d'ordinateur, dans lequel le programme d'ordinateur, lorsqu'il est exécuté par un processeur, exécute des étapes dans le procédé de traitement de paquets de données de l'une quelconque des revendications 1 à 8.
